# EUROPÄISCHE PATENTANMELDUNG

(11) **EP 3 364 523 A1**
(43) Veröffentlichungstag der Anmeldung: **22.08.2018**
(21) Anmeldenummer: 17157127.6
(22) Anmeldetag: 21.02.2017
(51) Int. Cl.: H02K 3/24, H02K 3/34, H02K 3/487

(54) **EINSETZTEIL FÜR EINEN ROTOR EINER ELEKTRISCHEN ROTATIONSMASCHINE**

(71) Anmelder: Siemens Aktiengesellschaft, 80333 München (DE)
(72) Erfinder: Kowalski, Matthias, 45478 Mülheim an der Ruhr (DE); Sievert, Roland, 47199 Duisburg (DE)

(57) **Zusammenfassung**

Die Erfindung betrifft ein Einsetzteil (7) für einen Rotor (2) einer elektrischen Rotationsmaschine zur Anordnung zwischen einem Nutverschlusskeil (5) und einer Wicklung (3) des Rotors (2), wobei das Einsetzteil (7) einen Durchgang (8) aufweist, der als Strömungsglätter ausgebildet ist.

## Beschreibung

Die Erfindung betrifft ein Einsetzteil für einen Rotor einer elektrischen Rotationsmaschine.

Elektrische Rotationsmaschinen können motorisch als auch generatorisch betrieben werden sowie auch als Phasenschieber genutzt werden. Derartige elektrische Rotationsmaschinen weisen einen Stator und einen Rotor auf.

Der Rotor weist Nuten in einem Rotorgrundkörper auf, in die neben Wicklung aus z.B. Kupfer für die Erregerspule auch eine Nutkopfeinlage und ein Nutverschlusskeil eingesetzt sind. Die Hauptaufgabe der Wicklung ist es, einen elektrischen Erregerstrom zu leiten. In dieser Wicklung entsteht aufgrund ohmscher Verluste Wärme, deren Menge proportional zum Kehrwert der Querschnittsfläche der Wicklung und zum Quadrat des die Wicklung durchfließenden elektrischen Erregerstromes ist.

Diese Verluste können z.B. ca. 40%, aber auch mehr oder weniger der gesamten elektromagnetischen Verluste in der als Generator betriebenen elektrischen Rotationsmaschine aus. Daher verfügen die Erregerspule, die Nutkopfeinlage und der Nutverschlusskeil über innere, radial orientierte, Kühlkanäle.

Die Hauptaufgabe des Rotorkeils ist es, die anderen in der Nut angeordneten Bauteile gegen Fliehkräfte zu sichern und mechanisch an eine Rotorzahnflanke zu fixieren. Die Nutkopfeinlage hingegen stellt trotz des inneren Kühlgaskanals eine ausreichend langen Kriechstrecke zum Nutverschlusskeil bereit.

Jedoch entsteht ein die Durchströmung mit Kühlgas begrenzender Strömungswiderstand durch große Geometriesprünge im Kühlkanal an der Übergangsstelle zwischen der Rotorwicklung und der Nutkopfeinlage sowie an der Übergangsstelle zwischen der Nutkopfeinlage und dem Nutverschlusskeil.

Es besteht daher Bedarf daran, Wege aufzuzeigen, wie die Kühlung einer derartigen Rotors verbessert werden kann.

Erfindungsgemäß weist das Einsetzteil für einen Rotor einer elektrischen Rotationsmaschine zur Anordnung zwischen einem Nutverschlusskeil und einer Wicklung des Rotors einen Durchgang auf, der als Strömungsglätter ausgebildet ist.

Durch die Ausbildung als Strömungsglätter wird die Durchströmung mit Kühlgas und damit die Kühlung verbessert. Die Geometrie ist derart gestaltet, dass diese einen strömungstechnisch bevorzugten Übergang zwischen der Wicklung und den Nutverschlusskeil herstellt. Ferner wird so eine niedrigere Temperatur in der Erregerwicklung bei gleichem Erregerstrom, eine höhere Ausnutzbarkeit der elektrischen Rotationsmaschine, ein verbesserter Wirkungsgrad durch niedrigere Kupfertemperatur erreicht. Des Weiteren kann ein weniger leistungsstarkes Gebläse verwendet werden, was den Wirkungsgrad verbessert.

Bevorzugt ist das Einsetzteil zum Einsetzen in eine Ausnehmung einer Nutkopfeinlage ausgebildet ist, die zwischen dem Nutverschlusskeil und der Wicklung anordnenbar ist. So kann ein Einsetzteil verwendet werden, das in bereits bestehende elektrische Rotationsmaschinen eingesetzt werden kann. Zudem ist das Einsetzteil mit geringem Aufwand zu fertigen.

Bevorzugt weist der Durchgang der dem Nutverschlussteil zugewandten Seite eine erste Öffnungsfläche und der der Wicklung zugewandten Seite eine zweite Öffnungsfläche auf, wobei die erste Öffnungsfläche und die zweite Öffnungsfläche unterschiedlich ausgebildet sind. Somit bewirkt der Durchgang eine weiche Querschnittverengung in Strömungsrichtung des Kühlmediums.

Bevorzugt ist der Durchgang in Durchströmungsrichtung sich stetig ändernd ausgebildet. Somit weist der Durchgang keine Kanten oder Stufen auf. Dies führt zu einem besonders niedrigen Strömungswiderstand.

Bevorzugt weist die dem Nutverschlussteil zugewandten Seite eine erste Öffnungsfläche und der der Wicklung zugewandten Seite eine zweite Öffnungsfläche auf, wobei die erste Öffnungsfläche und/oder die zweite Öffnungsfläche zumindest abschnittsweise oval, kreisförmig, ellipsenförmig, rechteckförmig, vieleckförmig oder schlitzförmig ausgebildet sind. Dabei bezeichnet der Begriff Oval eine ebene rundliche konvexe Figur. Die Figur umfasst auch Kreise und Ellipsen als Spezialfälle, wobei ein beliebiges Oval im Gegensatz zu diesen keine Symmetrieachse besitzen muss. Die erste Öffnungsfläche und zweite Öffnungsfläche können jeweils gleichförmig ausgebildet sein, d.h. jeweils oval, kreis- oder ellipsenförmig. Alternativ können die erste Öffnungsfläche und zweite Öffnungsfläche auch verschiedenförmig ausgebildet sein, z.B. die erste Öffnungsfläche ist kreis- und die zweite Öffnungsfläche ist ellipsenförmig ausgebildet.

Bevorzugt weist die dem Nutverschlussteil zugewandten Seite eine erste Öffnungsfläche und der der Wicklung zugewandten Seite eine zweite Öffnungsfläche auf, wobei die erste Öffnungsfläche und die zweite Öffnungsfläche einen Versatz eines Kühlkanals bildend ausgebildet sind. So kann der Strömungswiderstand des Durchgangs nochmals reduziert werden.

Bevorzugt erstreckt sich der Versatz in Richtung einer Erstreckungsachse des Rotors. So lassen sich die Strömungsverhältnisse noch weiter verbessern.

Ferner gehören zur Erfindung ein Rotor für eine elektrische Rotationsmaschine mit einem derartigen Einsetzteil und eine elektrische Rotationsmaschine mit einem derartigen Rotor.

Im Folgenden wird eine bevorzugte Ausführungsform des erfindungsgemäßen Verfahrens anhand der beigefügten schematischen Zeichnungen erläutert. Es zeigt:
- Fig. 1: eine schematische Darstellung eines Ausführungsbeispiels eines Rotors einer elektrischen Rotationsmaschine.
- Fig. 2: ein Detail des in Fig. 1 dargestellten Rotors.
- Fig. 3: eine perspektivische Darstellung eines ersten Ausführungsbeispiels eines in eine Nutkopfeinlage eingesetzten Einsetzteils.
- Fig. 4: eine perspektivische Darstellung die in Fig. 3 gezeigten Einsetzteils.
- Fig. 5: einen Schnitt durch die Fig. 3.
- Fig. 6: eine perspektivische Darstellung eines zweiten Ausführungsbeispiels eines in eine Nutkopfeinlage eingesetzten Einsetzteils.
- Fig. 7: eine perspektivische Darstellung die in Fig. 6 gezeigten Einsetzteils.
- Fig. 8: einen Schnitt durch die Fig. 6.
- Fig. 9: eine perspektivische Darstellung eines dritten Ausführungsbeispiels eines in eine Nutkopfeinlage eingesetzten Einsetzteils.

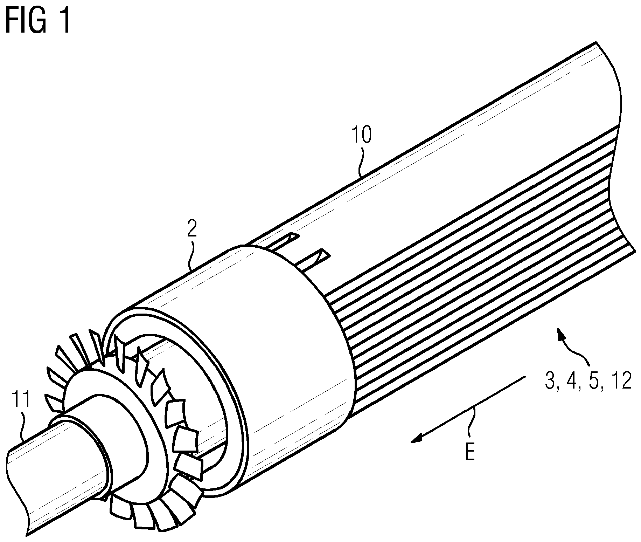

Es wird zunächst auf Fig.1 Bezug genommen.

Dargestellt ist von einer elektrischen Rotationsmaschine ein Rotor 2. Die elektrische Rotationsmaschine ist im vorliegenden Ausführungsbeispiel als Generator ausgebildet. Abweichend vom vorliegenden Ausführungsbeispiel kann die elektrische Rotationsmaschine auch als Motor oder Phasenschieber ausgebildet sein.

Um die elektrische Rotationsmaschine im Betrieb zu kühlen wird ein Ständer der elektrischen Rotationsmaschine beispielsweise mit Wasser oder Gas, wie z.B. Luft oder Wasserstoffgas gekühlt, während der Rotor 2 mit Gas, wie z.B. Luft oder Wasserstoffgas, gekühlt wird.

Eine Welle 11 weist einen verdickten Bereich auf, der im Allgemeinen als Rotor-Aktivteil 10 bezeichnet wird. Das Rotor-Aktivteil 10 ist z.B. aus massivem Stahl gefertigt.

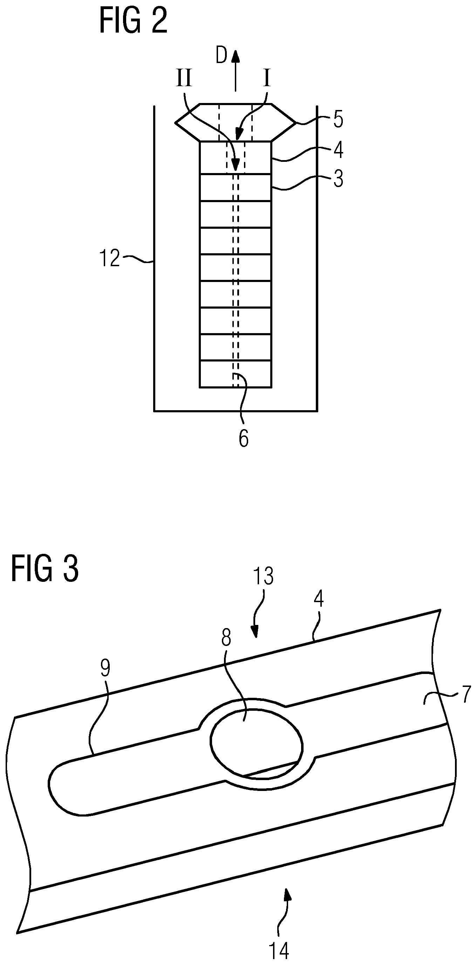

Das Rotor-Aktivteil 10 weist eine Mehrzahl von Nuten 12 auf, in die jeweils Wicklungen 3, eine Nutkopfeinlage 4 und ein Nutverschlussstein 5 eingesetzt sind, wie dies nun unter zusätzliche Bezugnahme auf Fig. 2 erläutert wird.

In die jeweiligen Nuten 12 sind in radialer Richtung von innen nach außen zuerst die Wicklungen 3, dann die Nutkopfeinlage 4 und schließlich der Nutverschlussstein 5 eingesetzt.

Um insbesondere die Wicklungen 3 zu kühlen ist ein Kühlkanal 6 vorgesehen, der sich in radialer Richtung von innen nach außen zuerst durch die Wicklungen 3, dann durch die Nutkopfeinlage 4 und schließlich durch den Nutverschlussstein 5 erstreckt. Im Betrieb strömt Kühlgas, wie z.B. Luft oder Wasserstoffgas in Durchströmungsrichtung D in radialer Richtung von innen nach außen, um Wärmeenergie insbesondere von den Wicklungen 3 abzuführen. Abweichend vom vorliegenden Ausführungsbeispiel kann die Durchströmungsrichtung D auch umgekehrt orientiert sein.

An einem ersten Übergang von den Wicklungen 3 zu der der Nutsteineinlage 4 und an einem zweiten Übergang zu dem Nutverschlussstein 5 sind jedoch jeweils Geometriesprünge I, II, die im vorliegenden Ausführungsbeispiel zu einer sprung- bzw. stufenförmigen Aufweitung des Querschnitts des Kühlkanals 5 in Durchströmungsrichtung D führen. Im Betrieb bilden sich an den jeweiligen Geometriesprüngen I, II Wirbel, die zu einer Erhöhung des Strömungswiderstandes im Kühlkanal 6 führen.

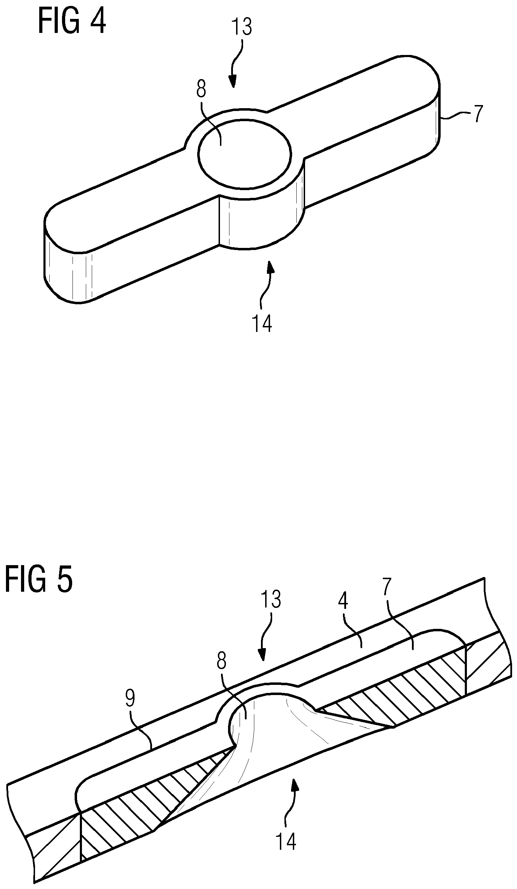

Um den Strömungswiderstand zu reduzieren ist ein Einsetzteil 7 vorgesehen, von dem nun ein erstes Ausführungsbeispiel unter Bezugnahme auf die Fig. 3 bis 5 erläutert wird.

Das Einsetzteil 7 ist im vorliegenden Ausführungsbeispiel mittels eines additiven Fertigungsverfahrens hergestellt worden. Es kann aber auch mittels anderer, insbesondere mittels materialabtragenden, Fertigungsverfahren hergestellt werden.

Das Einsetzteil 7 weist einen Durchgang 8 auf, der im montierten Zustand einen Abschnitt des Kühlkanals 6 bildet. Dabei ist Einsetzteil 7 zum Einsetzen in eine entsprechende Ausnehmung 9 der Nutkopfeinlage 4 ausgebildet. Die Nutkopfeinlage 4 weist die Ausnehmung 9 auf, sodass das Einsetzteil 7 ohne Modifikation der Nutkopfeinlage 4 eingesetzt werden kann.

Der Durchgang 8 ist als Strömungsglätter mit vorliegendem Ausführungsbeispiel trichterförmiger Innenwandung ausgebildet, so dass der Durchgang 8 nun keine Geometriesprünge I, II mehr aufweist oder allenfalls stark reduzierte Geometriesprünge aufweist. Somit ist die Neigung zur Wirbelbildung reduziert und damit auch der Strömungswiderstand des Durchgangs 8.

Dabei ist der Durchgang 8 im vorliegenden Ausführungsbeispiel in Durchströmungsrichtung D sich stetig ändernd ausgebildet und weist daher keine Kanten oder Stufen auf. Der Durchgang 8 weist an der dem Nutverschlussteil 3 zugewandten Seite eine erste Öffnungsfläche 13 und der der Wicklung 3 zugewandten Seite eine zweite Öffnungsfläche 14 auf.

Dabei sind im vorliegenden Ausführungsbeispiel die erste Öffnungsfläche 13 und die zweite Öffnungsfläche 14 unterschiedlich ausgebildet. Ferner ist im vorliegenden Ausführungsbeispiel die erste Öffnungsfläche 13 kreisförmig und die zweite Öffnungsfläche 14 ellipsenförmig ausgebildet. Abweichend vom vorliegenden Ausführungsbeispiel kann die erste Öffnungsfläche 13 und/oder zweite Öffnungsfläche 14 auch oval, ellipsenförmig, rechteckförmig vieleckförmig oder schlitzförmig ausgebildet sein.

Im montieren Zustand können jeweils die erste Öffnungsfläche 13 und zweite Öffnungsfläche 14 deckungsgleich mit dem Kühlkanal 6 sein. Aufgrund einer Erwärmung im Betrieb und damit verbundenen Dehnung insbesondere der Wicklungen 3 kann es zu einer Verschiebung der ersten Öffnungsfläche 13 und zweiten der Öffnungsfläche 14 kommen. Diese Verschiebung kann bei der Dimensionierung des Durchgangs 8 berücksichtigt werden, d.h. der Durchgang 8 ist im vorliegenden Ausführungsbeispiel größer ausgebildet, um diese Toleranzverschiebung zu kompensieren.

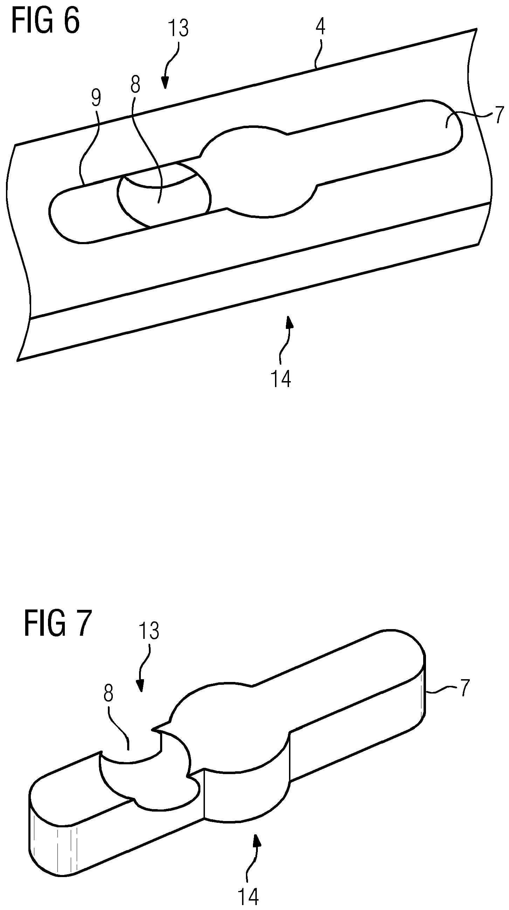

Es wird nun unter zusätzliche Bezugnahme auf Fig. 6 bis 8 ein zweites Ausführungsbeispiel des Einsetzteils 7 erläutert.

Das in Fig. 6 bis 8 dargestellte zweite Ausführungsbeispiel des Einsetzteils 7 unterscheidet sich von dem in den Fig. 3 bis 6 gezeigten ersten Ausführungsbeispiel dadurch, die erste Öffnungsfläche 13 und die zweite Öffnungsfläche 14 einen Versatz eines Kühlkanal 6 bildend ausgebildet sind, wobei der Versatz sich in Richtung einer Erstreckungsachse E der Welle 11 des Rotors 2 erstreckt.

Ferner ist im vorliegenden zweiten Ausführungsbeispiel die erste Öffnungsfläche 13 abschnittsweise kreisförmig und die zweite Öffnungsfläche 14 ellipsenförmig ausgebildet.

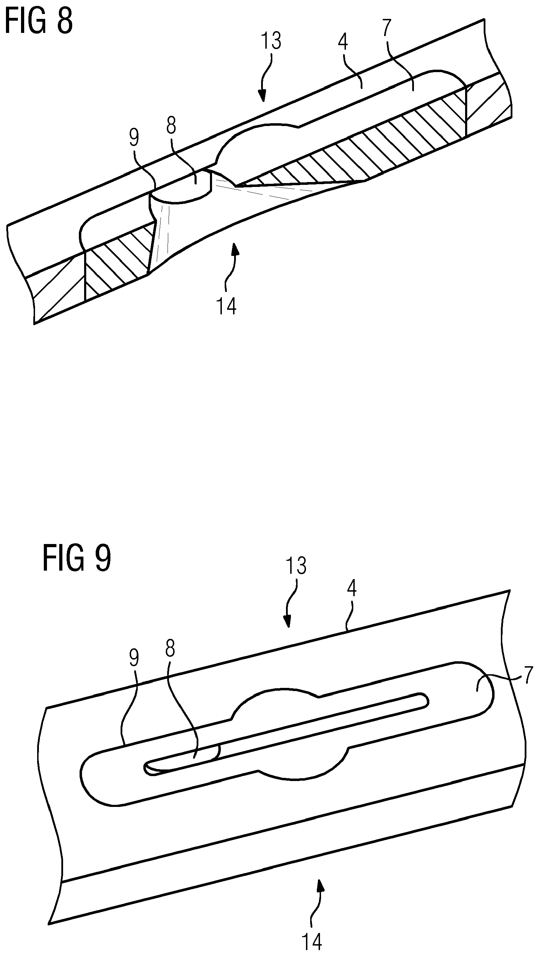

Es wird nun unter zusätzliche Bezugnahme auf Fig. 9 ein drittes Ausführungsbeispiel des Einsetzteils 7 erläutert.

Das in Fig. 9 dargestellte dritte Ausführungsbeispiel des Einsetzteils 7 unterscheidet sich von dem in die Fig. 7 bis 8 gezeigten zweiten Ausführungsbeispiel dadurch, dass die zweite Öffnungsfläche 14 schlitzförmig ausgebildet ist.

So wird durch die Ausbildung des Durchgangs des Einsetzteils als Strömungsglätter die Durchströmung mit Kühlgas und damit die Kühlung verbessert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Einsetzteil (7) für einen Rotor (2) einer elektrischen Rotationsmaschine zur Anordnung zwischen einem Nutverschlusskeil (5) und einer Wicklung (3) des Rotors (2), wobei das Einsetzteil (7) einen Durchgang (8) aufweist, der als Strömungsglätter ausgebildet ist.

2. Einsetzteil (7) nach Anspruch 1,
wobei das Einsetzteil (7) zum Einsetzen in eine Ausnehmung (9) einer Nutkopfeinlage (4) ausgebildet ist, die zwischen dem Nutverschlusskeil (5) und der Wicklung (3) anordnenbar ist.

3. Einsetzteil (7) nach Anspruch 1 oder 2,
wobei der Durchgang (8) der dem Nutverschlussteil (5) zugewandten Seite eine erste Öffnungsfläche (13) und der der Wicklung (3) zugewandten Seite eine zweite Öffnungsfläche (14) aufweist, wobei die erste Öffnungsfläche (13) und die zweite Öffnungsfläche (14) unterschiedlich ausgebildet sind.

4. Einsetzteil (7) nach Anspruch 1, 2 oder 3,
wobei der Durchgang (8) in Durchströmungsrichtung (D) sich stetig ändernd ausgebildet ist.

5. Einsetzteil (7) nach einem der Ansprüche 1 bis 4,
wobei der dem Nutverschlussteil (5) zugewandten Seite eine erste Öffnungsfläche (13) und der der Wicklung (3) zugewandten Seite eine zweite Öffnungsfläche (14) aufweist, wobei die erste Öffnungsfläche (13) und/oder die zweite Öffnungsfläche (14) zumindest abschnittsweise oval, kreisförmig, ellipsenförmig, reckeckförmig, vieleckförmig oder schlitzförmig ausgebildet sind.

6. Einsetzteil (7) nach einem der Ansprüche 1 bis 5,
wobei der dem Nutverschlussteil (5) zugewandten Seite eine erste Öffnungsfläche (13) und der der Wicklung (3) zugewandten Seite eine zweite Öffnungsfläche (14) aufweist, wobei die erste Öffnungsfläche (13) und die zweite Öffnungsfläche (14) einen Versatz eines Kühlkanal (6) bildend ausgebildet sind.

7. Einsetzteil (7) nach Anspruch 6,
wobei der Versatz sich in Richtung einer Erstreckungsachse (E) des Rotors (2) erstreckt.

8. Rotor (2) für eine elektrische Rotationsmaschine (1) mit einem Einsetzteil (7) nach einem der Ansprüche 1 bis 7.

9. Elektrische Rotationsmaschine mit einem Rotor (2) nach Anspruch 8.
